(19) Europäisches Patentamt
European Patent Office
Office européen des brevets

(11) Veröffentlichungsnummer: **0 215 368 A2**

(12) **EUROPÄISCHE PATENTANMELDUNG**

(21) Anmeldenummer: 86112109.3

(51) Int. Cl.⁴: **C 08 G 77/14**, C 08 L 83/06

(22) Anmeldetag: 02.09.86

(30) Priorität: 19.09.85 DE 3533350

(43) Veröffentlichungstag der Anmeldung: 25.03.87 Patentblatt 87/13

(84) Benannte Vertragsstaaten: BE DE FR GB IT NL

(71) Anmelder: Th. Goldschmidt AG,
Goldschmidtstrasse 100 Postfach 101461,
D-4300 Essen 1 (DE)

(72) Erfinder: Koerner, Götz, Dr., Kantorie 126, D-4300 Essen (DE)
Erfinder: Weitemeyer, Christian, Dr., Sundernholz 67, D-4300 Essen (DE)

(54) **Organopolysiloxane und diese enthaltende aushärtbare Organopolysiloxanzubereitung.**

(57) Neue Organopolysiloxane der allgemeinen Formel

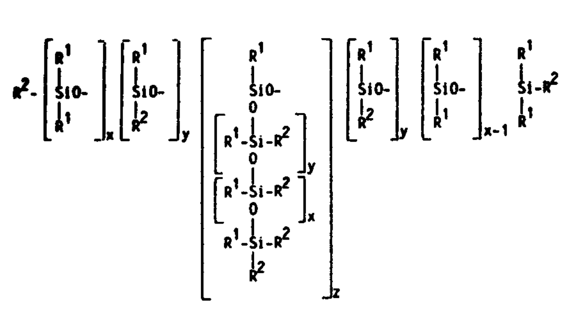

wobei
$R_1$ ein Methyl- oder Phenylrest ist, jedoch mindestens 90% der Reste $R^1$ Methylreste sind,
$R^2$ dem Rest $R^1$ entspricht oder den Rest $OR^3$ bedeutet, der von einem Alkoholgemisch $HOR^3$ abgeleitet ist, welches aus

a) einem eine -C≡-Gruppe enthaltenden, aliphatischen Alkohol, geradkettig oder verzweigt, mit 3 bis 25 Kohlenstoffatomen und

b) einem Monohydroxypolyallylether eines Polyalkohols mit 2 bis 6 Hydroxylgruppen besteht,

Anzahl der Einheiten x = 0 bis 2000,
Anzahl der Einheiten y = 0 bis 20,
Σ Einheiten x, y ≥ 1,
Anzahl der Einheiten z = 0 bis 10,
mit der Maßgabe, daß im mittleren Molekül mindestens eine -C≡C-Gruppe enthalten ist und das Zahlenverhältnis der -C≡-Gruppe zu den Allylgruppen 5:1 bis 1:250 beträgt,
und diese Organopolysiloxane enthaltende härtbare Zubereitungen.

Die neuen Organopolysiloxane sind, mit Wasserstoffpolysiloxanen und Katalysator vermischt, bei Raumtemperatur lagerstabil und härten bei erhöhten Temperaturen schnell aus. Die ausgehärteten Mischungen haben abhäsive Eigenschaften und zeigen keine Störungen durch Migration nicht gebundener Anteile.

EP 0 215 368 A2

Th. Goldschmidt AG, Essen

# Organopolysiloxane und diese enthaltende aushärtbare Organopolysiloxanzubereitung

Es ist bekannt, zur Herstellung abhäsiver Beschichtungsmassen Organosiliciumverbindungen, die olefinisch ungesättigte Gruppen aufweisen, mit Organosiliciumverbindungen, die SiH-Gruppen aufweisen, in Gegenwart von Platinkatalysatoren umzusetzen. So ist beispielsweise in der DE-PS 29 18 254 ein derartiges Verfahren beschrieben, bei dem man als Organosiliciumverbindungen, die olefinisch ungesättigte Gruppen aufweisen, solche verwendet, die im mittleren Molekül mindestens eine Gruppe der Formel

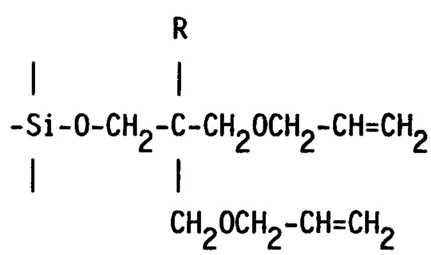

(R = Methyl-, Ethyl- oder $-CH_2OCH_2-CH=CH_2$-Gruppe)
enthalten.

Zubereitungen, welche derartige siliciumorganische Verbindungen mit olefinisch ungesättigten Gruppen und Organosiliciumverbindungen mit SiH-Gruppen neben Platinkatalysatoren enthalten, sind nicht unbegrenzt lagerstabil.

Aus der DE-OS 27 03 605 ist eine aushärtbare Organopolysiloxanzubereitung erhöhter Lagerstabilität bekannt, welche aus einem Organopolysiloxan mit mindestens zwei direkt an die Siliciumatome eines Moleküls gebundenen Vinylgruppen, einem Organowasserstoffpolysiloxan mit mindestens zwei direkt an die Siliciumatome eines Moleküls gebundenen Wasserstoffatomen und einem Platinkatalysator besteht, welche dadurch gekennzeichnet ist, daß das
(a) Organopolysiloxan die folgende durchschnittliche Einheitsformel aufweist

$$(CH_2=CH)_a R_b SiO_{\frac{4-a-b}{2}} \quad ,$$

wobei R die gleiche oder eine unterschiedliche einwertige Kohlenwasserstoffgruppe ohne aliphatisch ungesättigten Rest bezeichnet, a einen Wert von 0,00025 bis 0,5 und b einen solchen von 0,75 bis 2 hat mit der Maßgabe, daß die Summe a und b 1,25 bis 2,25 beträgt,

(b) Organohydrogenpolysiloxan, das keine aliphatisch ungesättigten Reste aufweist, in solchen Mengen vorgesehen ist, daß 0,5 bis 4 Wasserstoffatome direkt an die Siliciumatome pro Vinylgruppe in der Komponente (a) vorgesehen sind und das die Zusammensetzung

(c) ein eine Alkinyloxygruppe enthaltendes Organopolysiloxan aufweist, welches in einem Molekül wenigstens eine einwertige Kohlenwasserstoffgruppe mit einer -C≡C-Bindung, die über eine Sauerstoff/Siliciumbindung an das Siliciumatom angeschlossen ist, hat.

Das wesentliche Merkmal dieser DE-OS 27 03 605 besteht somit darin, daß durch die Anwesenheit einer Alkinyloxygruppe die vorzeitige Aushärtung der Zubereitung vermieden wird, wobei aber die schnelle Durchhärtung der Zubereitung bei erhöhten Temperaturen nicht beeinträchtigt wird.

Es hat sich jedoch als nachteilig gezeigt, daß die Alkinyloxygruppen enthaltenden Organopolysiloxane entweder nicht vollständig in das bei der Aushärtung entstehende Polymerisat eingebunden werden oder daß im Falle ihrer Addition Verbindungen mit Allyloxygruppierungen entstehen können, die verhältnismäßig hydrolyseinstabil sind.

Sowohl die nicht in das Polymergerüst eingebauten Organopolysiloxane mit Alkinyloxygruppen wie die durch Hydrolyse freigesetzten Verbindungen wandern an die Oberfläche der Beschichtung und beeinträchtigen die Eignung dieser ausgehärteten Beschichtungen als abhäsive Beschichtungen.

Aufgabe der vorliegenden Erfindung ist es, Organopolysiloxanzubereitungen auf der Basis von Organosiliciumverbindungen mit olefinisch ungesättigten Gruppen und Organosiliciumverbindungen mit SiH-Gruppen, die in Gegenwart von Katalysatoren miteinander reagieren, zu finden, welche in Gegenwart von Katalysatoren lagerstabil, jedoch bei erhöhten Temperaturen schnell aushärtend sind, aber die Nachteile der bekannten Zubereitungen, insbesondere die durch die Migration nicht eingebundener Bestandteile an die Oberfläche der ausgehärteten Beschichtung, nicht aufweisen.

Überraschenderweise wurde gefunden, daß diese Aufgabe dadurch gelöst werden kann, wenn als Organosiliciumverbindungen, die olefinisch ungesättigte Gruppen aufweisen, solche verwendet werden, die zusätzlich im gleichen Molekül acetylenisch ungesättigte Gruppen enthalten.

Gegenstand der vorliegenden Erfindung sind deshalb zunächst neue Organopolysiloxane der allgemeinen, durchschnittlichen Formel

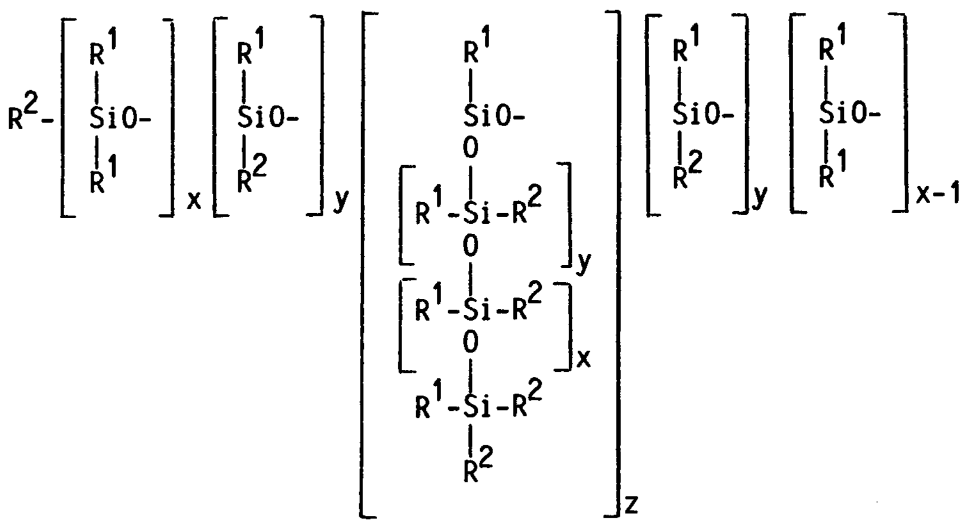

I

wobei

$R^1$ ein Methyl- oder Phenylrest ist, jedoch mindestens 90 % der Reste $R^1$ Methylreste sind,

$R^2$ dem Rest $R^1$ entspricht oder den Rest $OR^3$ bedeutet, der von einem Alkoholgemisch $HOR^3$ abgeleitet ist, welches aus

a) einem eine -C≡C-Gruppe enthaltenden, aliphatischen Alkohol, geradkettig oder verzweigt, mit 3 bis 25 Kohlenstoffatomen und

b) einem Monohydroxypolyallylether eines Polyalkohols mit 2 bis 6 Hydroxylgruppen besteht,

Anzahl der Einheiten x = 0 bis 2000,
Anzahl der Einheiten y = 0 bis 20,
Σ Einheiten x, y $\geq$ 1,
Anzahl der Einheiten z = 0 bis 10,

mit der Maßgabe, daß im mittleren Molekül mindestens eine -C≡C-Gruppe enthalten ist und das Zahlenverhältnis der -C≡C-Gruppe zu den Allylgruppen 5 : 1 bis 1 : 250 beträgt.

Als Alkohol mit acetylenischen Kohlenwasserstoffgruppen im Alkoholgemisch $R^3OH$ verwendet man vorzugsweise Alkohole der Formeln

$HOCH_2C{\equiv}CH$ , $HOCH_2CH_2C{\equiv}CH$ , 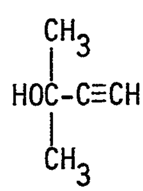 , 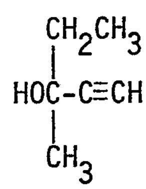 ,

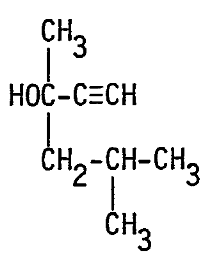 , 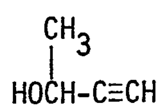 , 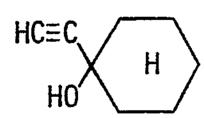

Als Monohydroxypolyallylether sind die Alkohole der Formeln

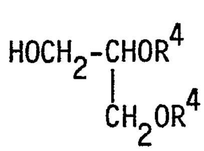 , 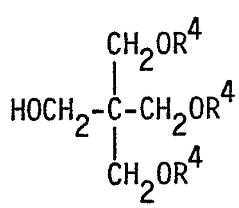 , $HOCH_2\text{-}(CHOR^4)_4\text{-}CH_2OR^4$ ,

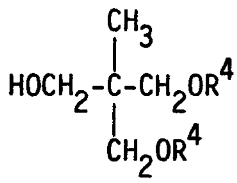 , 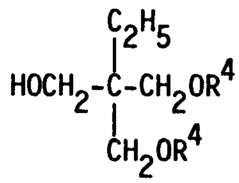

wobei $R^4$ ein Allylrest ist, bevorzugt.

Beispiele von geeigneten Organopolysiloxanen der Formel I sind

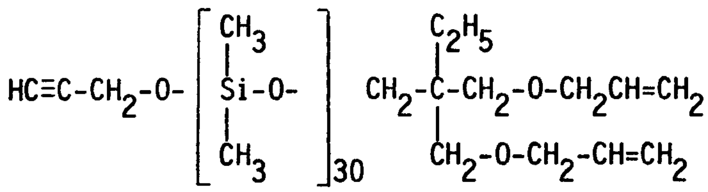

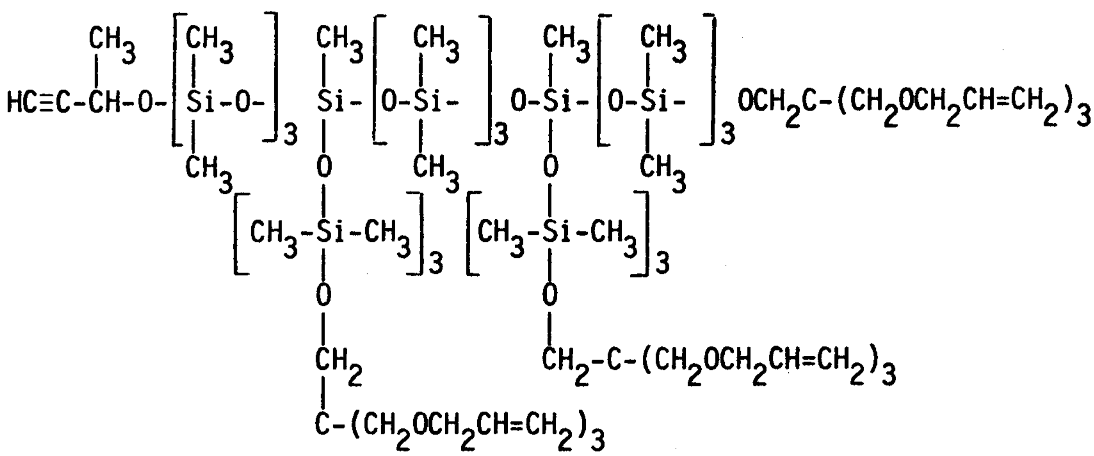

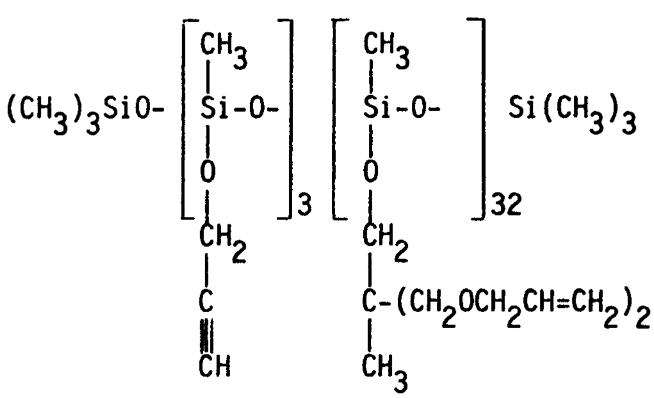

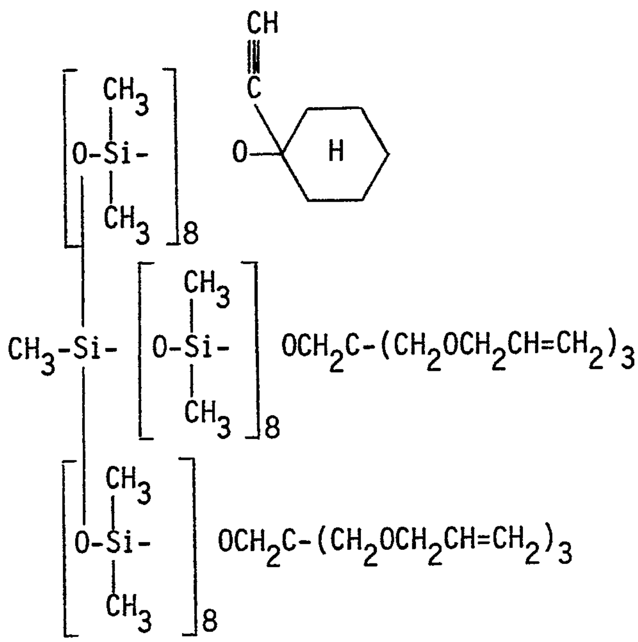

Die neuen Organopolysiloxane können in einfacher Weise in einem weiteren Gegenstand der Erfindung dadurch hergestellt werden, daß man ein Organopolysiloxan der allgemeinen Formel

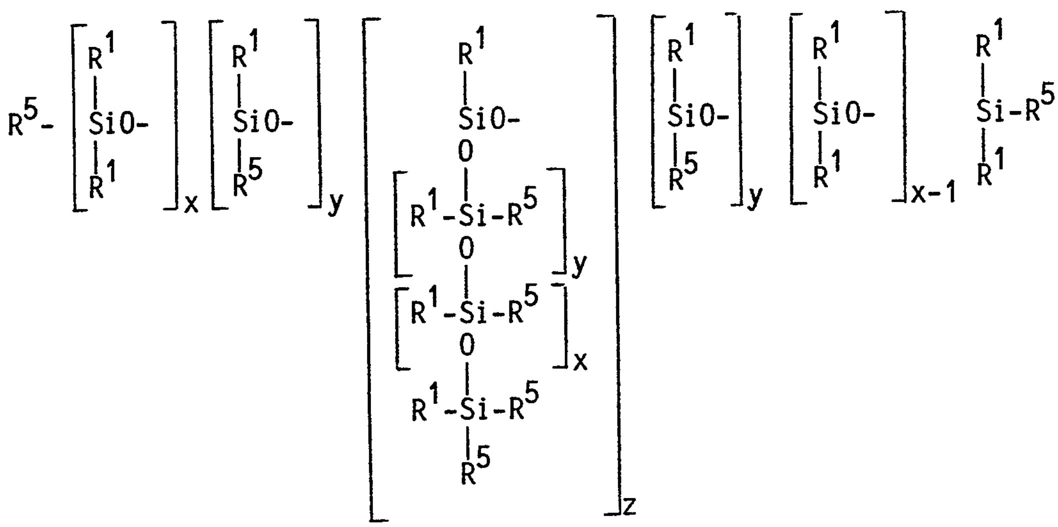

II

wobei

$R^1$, x, y, z wie oben definiert sind, und

$R^5$ dem Rest $R^1$ entspricht oder ein niederer Alkoxyrest mit 1 bis 4 Kohlenstoffatomen, ein Halogen- oder Wasserstoffrest ist, mit der Maßgabe, daß mindestens ein $R^3OH$ äquivalenter Teil der Reste $R^5$ Alkoxy-, Halogen- oder Wasserstoffreste sein müssen,

mit einem Alkoholgemisch $R^3OH$ in an sich bekannter Weise in solchen Mengen umsetzt, daß im mittleren Molekül des Verfahrensproduktes mindestens eine $-C\equiv C$-Gruppe vorhanden ist und das Zahlenverhältnis der $-C\equiv C$-Gruppe zu den Allylgruppen 5 : 1 bis 1 : 250 beträgt.

Die Umsetzung erfolgt zweckmäßig bei erhöhter Temperatur, vorzugsweise bei 70 bis 150°C.

Als Rest $R^5$ sind der Methoxy-, Ethoxy- und der Chlorrest bevorzugt.

Gegenstand der Erfindung sind ferner aushärtbare Organopolysiloxanzubereitungen, welche als wesentliches Merkmal aufweisen, daß sie neben Organopolysiloxanen mit SiH-Gruppen Organopolysiloxane der allgemeinen Formel I sowie Katalysatoren enthalten. Die erfindungsgemäßen Organopolysiloxanzubereitungen sind deshalb dadurch gekennzeichnet, daß sie aus

0,1 bis 95 Gew.-% Verbindungen des Patentanspruchs 1,

1 bis 70 Gew.-% eines Organopolysiloxans mit mindestens zwei an Si gebundenen Wasserstoffresten,

0,0001 bis 0,1 Gew.-% eines für die Anlagerung von Kohlenstoff-Kohlenstoff-Mehrfachbindungen an SiH-Gruppen an sich bekannten Katalysators,

0 bis 95 Gew.-% eines Organopolysiloxans der allgemeinen Formel

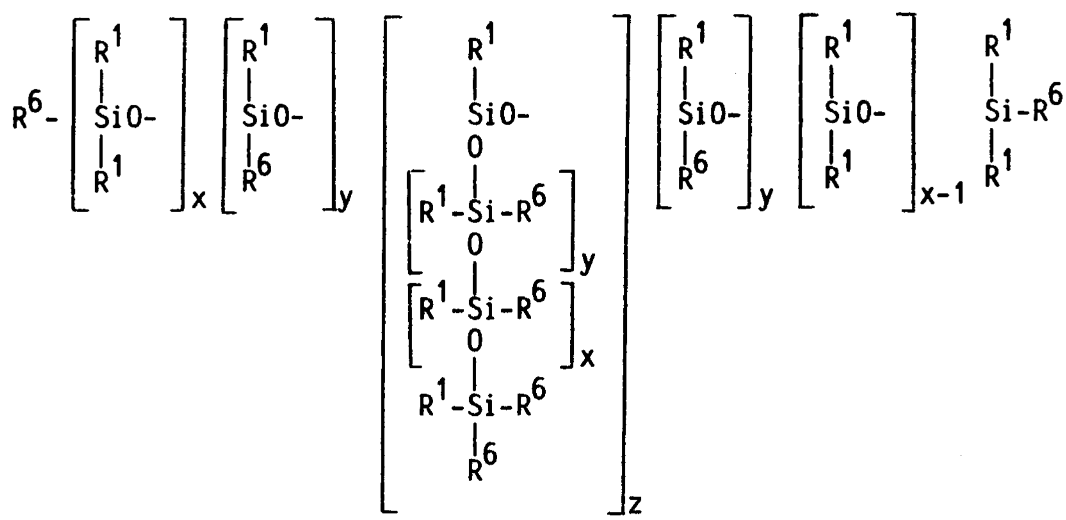

III

wobei $R^1$, x, y, z wie oben definiert sind und $R^6$ den Rest $-OR^7$ bedeutet, der von einem Monohydroxydi- oder -polyallylether eines Polyalkohols $HOR^7$ abgeleitet ist,

bestehen.

Der Gehalt der erfindungsgemäßen Organopolysiloxanzubereitung an Verbindungen der allgemeinen Formel I und an Organopolysiloxanen mit SiH-Gruppen kann in weiten Grenzen variieren. Das Verhältnis dieser beiden Komponenten zueinander wird im wesentlichen durch ihren Gehalt an olefinischen Doppelbindungen einerseits und SiH-Gruppen andererseits bestimmt. Dabei soll das Verhältnis von Gruppen mit olefinischen Doppelbindungen zu SiH-Gruppen etwa 0,8 : 1 bis 1 : 2,5 betragen.

In der aushärtbaren Organopolysiloxanzubereitung können außerdem Organopolysiloxane der allgemeinen Formel III enthalten sein. Diese Organopolysiloxane entsprechen den Organopolysiloxanen der allgemeinen Formel I, enthalten jedoch keine acetylenischen Kohlenwasserstoffgruppen. Setzt man der erfindungsgemäßen aushärtbaren Organopolysiloxanzubereitung Siloxane der allgemeinen Formel III zu, kann man den Gehalt der Zubereitung an Verbindungen der Formel I in entsprechender Weise verringern.

Im Falle des Zusatzes von Organopolysiloxanen der allgemeinen Formel III zur erfindungsgemäßen Zubereitung ist es zweckmäßig, solche Siloxane der Formel I zu verwenden, bei denen das Zahlenverhältnis der acetylenischen Kohlenwasserstoffgruppen zu den Allylgruppen innerhalb des beanspruchten Bereichs zu höheren Werten, wie etwa 2 : 1 bis 5 : 1, verschoben ist.

Die erfindungsgemäßen aushärtbaren Organopolysiloxanzubereitungen sind somit in mehrfacher Weise vorteilhaft: Die acetylenischen Kohlenwasserstoffgruppen sind Bestandteil des Organopolysiloxans, welches die Allylgruppen aufweist. Sie werden deshalb in das Gerüst des ausgehärteten Polymeren eingebaut und können nicht aus der ausgehärteten Schicht ausschwitzen. Selbst wenn die bei der Anlagerung der acetylenischen Kohlenwasserstoffgruppen an SiH entstehenden olefinischen Doppelbindungen zur Hydrolysereaktion führen würden, blieben die Polysiloxane in das Polymergerüst eingebunden. Hieraus ergibt sich, daß die ausgehärteten Beschichtungen ihre abhäsiven Eigenschaften unverändert beibehalten.

Die aushärtbaren Zubereitungen eignen sich deshalb in besonderer Weise zur Herstellung abhäsiver Beschichtungsmassen für flächige Träger, insbesondere Papier- und Kunststoffolien. Sie eignen sich ferner als Abdichtungsmassen zum Ausfüllen elektronischer Bauteile und zur Herstellung elastischer und starrer Formkörper.

Die aushärtbaren Organopolysiloxanzubereitungen können gegebenenfalls zusätzlich Füllstoffe, Pigmente, Weichmacher, Lösungsmittel oder Antioxidantien enthalten. Ihre Zubereitung ist in der aus dem Stand der Technik bekannten Weise möglich.

In den folgenden Beispielen wird die Herstellung der erfindungsgemäßen Verbindungen gezeigt. Es werden ferner die Eigenschaften der diese Verbindungen enthaltenden erfindungsgemäßen härtbaren Zubereitungen, insbesondere deren abhäsive Eigenschaften beschrieben.

## Beispiel 1

5653 g Chlorsiloxan der Formel

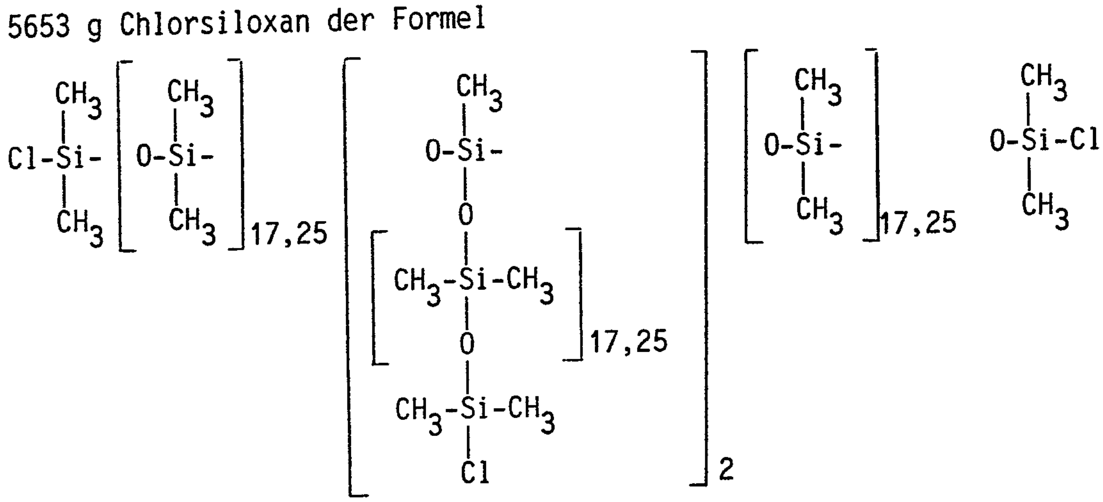

werden zu 56,6 g Propargylalkohol (1 Mol + 1 % Überschuß) $HC\equiv C-CH_2OH$ und 758,5 g Pentaerythrittriallylether (3 Mol + 1 % Überschuß)

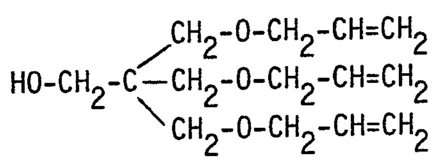

OHZ = 224

gelöst in 5000 g Toluol, innerhalb von 30 Minuten bei Raumtemperatur zugegeben. Anschließend wird bei Raumtemperatur 30 Minuten nachgerührt. Während 3 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 6030 g Produkt mit einer Viskosität von 385,5 mPa.s.

63,3 g dieses Siloxans werden mit 10,2 g eines SiH-haltigen Siloxans der Formel

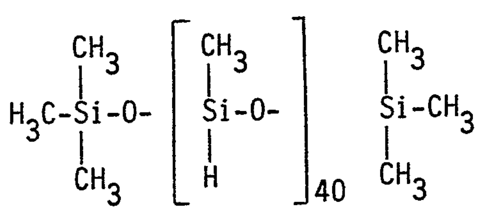

sowie mit 3,39 mg eines Platinkomplexes der Formel Pyridin . $C_2H_4$ . $PtCl_2$ gut verrührt. Die so zubereitete Mischung hat eine Viskosität von 340 mPa.s und eine Topfzeit von ca. 7 Tagen.

## Beispiel 2

5653 g Chlorsiloxan der Formel

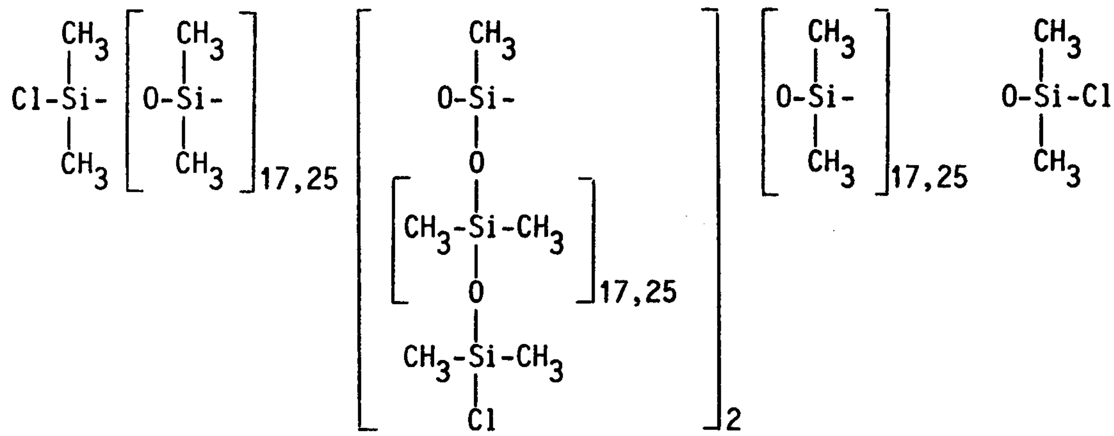

werden zu 113,2 g Propargylalkohol (2 Mol + 1 % Überschuß) und 432,3 g Trimethylolpropandiallylether (2 Mol + 1 % Überschuß)

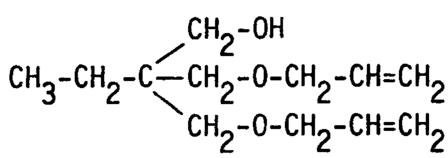

gelöst in 5000 g Toluol, innerhalb von 30 Minuten bei Raumtemperatur zugegeben. Anschließend wird bei Raumtemperatur 30 Minuten nachgerührt. Während 3 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 5685 g Produkt mit einer Viskosität von 344 mPa.s.

60,5 g dieses Siloxans werden mit 4,5 g eines SiH-haltigen Siloxans der Formel

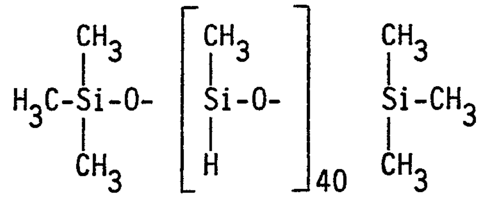

sowie mit 6 mg eines Platinkomplexes der Formel Pyridin . $C_2H_4$ . $PtCl_2$ gut verrührt. Die so zubereitete Mischung hat eine Viskosität von 320,5 mPa.s und eine Topfzeit von ca. 7 Tagen.

## Beispiel 3

5653 g Chlorsiloxan der Formel

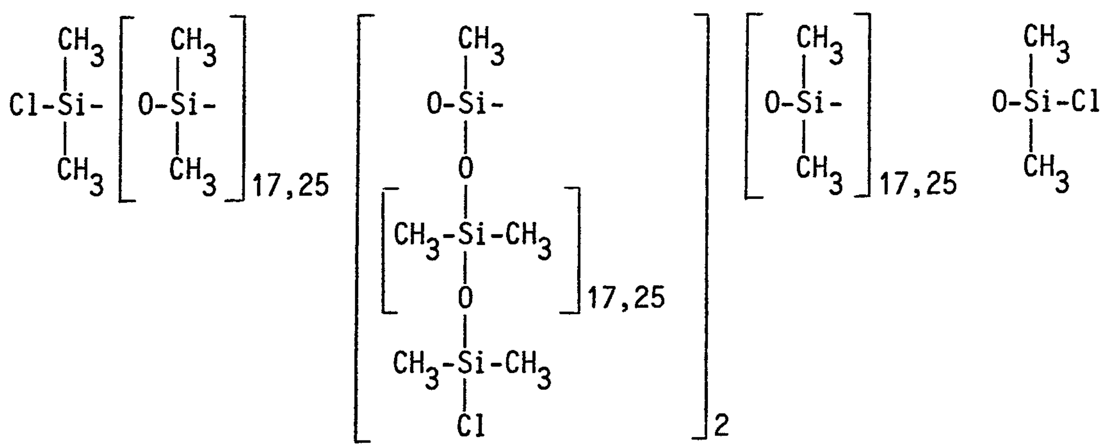

werden zu 557,5 g Nonadecadiin-7-ol (2 Mol + 1 % Überschuß)

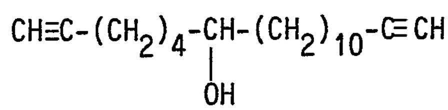

und 771,6 g Sorbitpentaallylether (2 Mol + 1 % Überschuß)

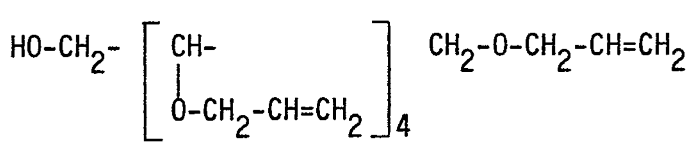

gelöst in 5000 g Toluol, innerhalb von 30 Minuten bei Raumtemperatur zugegeben. Anschließend wird bei Raumtemperatur 30 Minuten nachgerührt. Während 3 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 6475 g Produkt mit einer Viskosität von 389 mPa.s.

68,2 g dieses Siloxans werden mit 11,3 g eines SiH-haltigen Siloxans der Formel

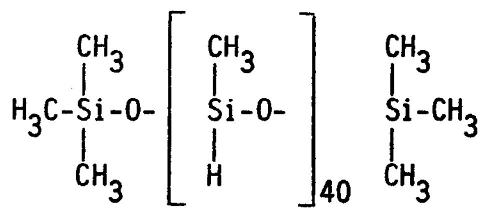

sowie mit 7,3 mg eines Platinkomplexes der Formel

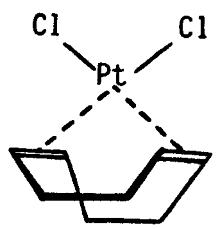

gut verrührt. Die so zubereitete Mischung hat eine Viskosität von 355 mPa.s und eine Topfzeit von ca. 7 Tagen.

## Beispiel 4

a) 2140,5 g Chlorsiloxan der Formel

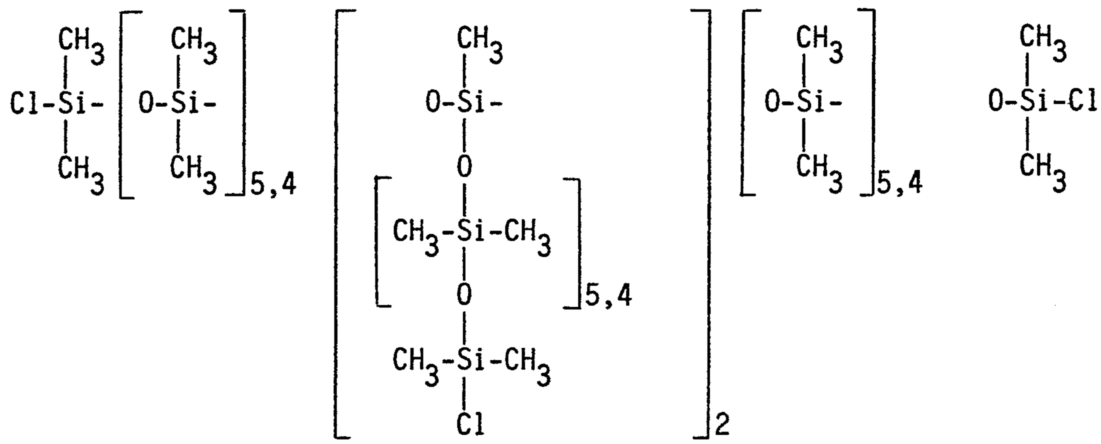

werden zu 75,2 g Propargylalkohol (1,33 Mol + 1 % Überschuß) $HC\equiv C-CH_2OH$ und 672,6 g Pentaerythrittriallylether (2,66 Mol + 1 % Überschuß)

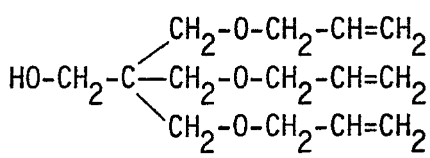

OHZ = 224

gelöst in 2000 g Toluol, innerhalb von 30 Minuten bei Raumtemperatur zugegeben. Anschließend wird bei Raumtemperatur 30 Minuten nachgerührt. Während 4 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 2708 g Produkt mit einer Viskosität von 47 mPa.s.

b) 3759,9 g Chlorsiloxan der Formel

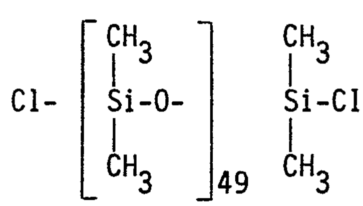

werden zu 505,8 g Pentaerythrittriallylether (2 Mol + 1 % Überschuß)

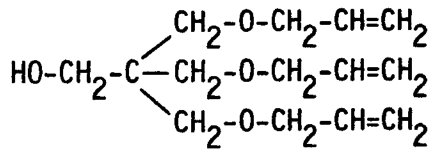

OHZ = 224

gelöst in 4000 g Toluol, innerhalb von 30 Minuten bei Raumtemperatur zugegeben. Anschließend wird bei Raumtemperatur 30 Minuten nachgerührt. Während 2 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 3893,8 g Produkt mit einer Jodzahl von 35,5.

41,8 g dieses Siloxans werden mit 6,8 g eines SiH-haltigen Siloxans der Formel

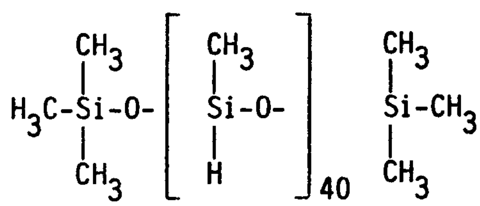

und mit 2,2 mg eines Platinkomplexes der Formel Pyridin . $C_2H_4$ . $PtCl_2$ sowie mit 1,2 g des gemäß Abschnitt a) erhaltenen Produktes gut verrührt. Die so zubereitete Mischung hat eine Viskosität von 72 mPa.s und eine Topfzeit von ca. 7 Tagen.

## Beispiel 5

a) 3759,9 g Chlorsiloxan der Formel

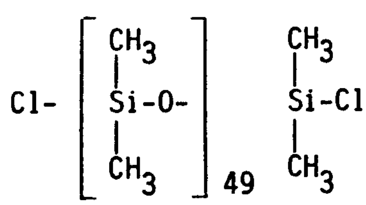

werden zu 113 g Propargylalkohol (2 Mol + 1 % Überschuß) $HC{\equiv}C\text{-}CH_2\text{-}OH$, gelöst in 4000 g Toluol, innerhalb von 30 Minuten bei Raumtemperatur zugegeben. Anschließend wird bei Raumtemperatur 30 Minuten nachgerührt. Während 2 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 3570 g Produkt mit einer Viskosität von 65,5 mPa.s.

b) 3759,9 g Chlorsiloxan der Formel

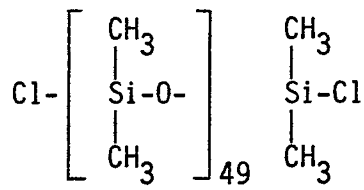

werden zu 505,8 g Pentaerythrittriallylether (2 Mol + 1 % Überschuß)

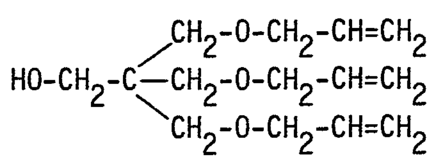

OHZ = 224

gelöst in 4000 g Toluol, innerhalb von 30 Minuten bei Raumtemperatur zugegeben. Anschließend wird bei Raumtemperatur 30 Minuten nachgerührt. Während 2 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 3893,8 g Produkt mit einer Jodzahl von 35,5.

37,9 g Siloxan a) und 41,8 g Siloxan b) werden mit 6,8 g eines SiH-haltigen Siloxans der Formel

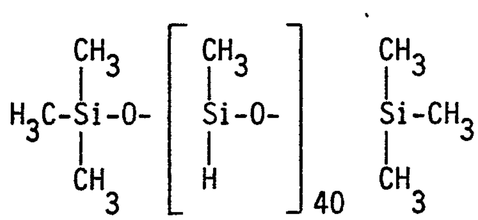

sowie mit 3,99 mg eines Platinkomplexes der Formel Pyridin . $C_2H_4$ . $PtCl_2$ gut verrührt. Die so zubereitete Mischung hat eine Viskosität von 76 mPa.s und eine Topfzeit von ca. 7 Tagen.

## Beispiel 6

2138,4 g Chlorsiloxan der Formel

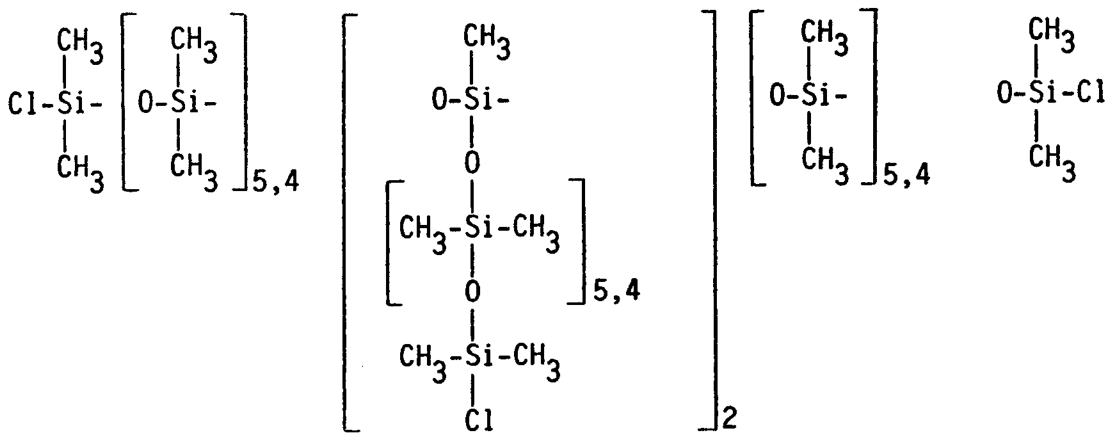

werden zu 1010 g Pentaerythrittriallylether (4 Mol + 1 % Überschuß)

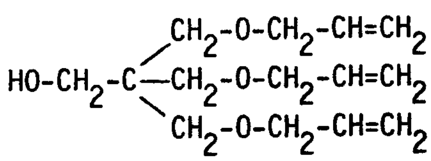

OHZ = 224

gelöst in 3000 g Toluol, innerhalb von 30 Minuten bei Raumtemperatur zugegeben. Anschließend wird bei Raumtemperatur 30 Minuten nachgerührt. Während 4 Stunden wird gasförmiges Ammoniak mit einer Geschwindigkeit von ca. 0,3 l/Minute in die Lösung eingeleitet. Ausgefallenes Ammoniumchlorid wird abfiltriert und das Filtrat bei 100°C im Vakuum eingedampft. Man erhält 2782,9 g Produkt mit einer Jodzahl von 101,0.

100 g dieses Siloxans werden mit 37,3 g eines SiH-haltigen Siloxans der Formel

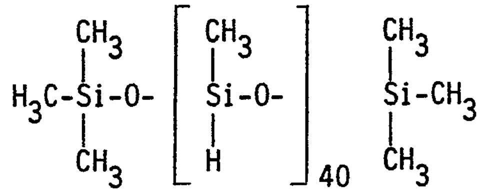

sowie mit 7,3 mg eines Platinkomplexes der Formel Pyridin . $C_2H_4$ . $PtCl_2$ gut verrührt. Die so zubereitete Mischung hat eine Viskosität von 161 mPa.s und eine Topfzeit von 8 Stunden.

<u>Anwendungstechnische Prüfung</u>

Die Zubereitungen der Beispiele 1 bis 6 werden mit einem Mehrwalzenauftragssystem auf ein gelbes Pergaminpapier (60 g/m²) mit einer Auflage von ca. 1 g/m² aufgetragen und in einem Umlufttrockenschrank 20 Sekunden bei 180°C zu klebfreien Beschichtungen ausgehärtet. Folgende Tests wurden durchgeführt:

a) Trennwert bei 20°C und 70°C,
b) Restklebkräfte,
c) Abriebfestigkeiten,
d) Topfzeiten.

a) Bestimmung der Trennwerte

Auf das beschichtete Papier wird selbstklebendes Klebeband mit der Breite von 3 cm auf das Papier gewalzt. Nach 24 Stunden Erwärmen auf 70°C unter einer Belastung von 2 kPa (20 p/cm²) und Abkühlen auf 20°C wird das Klebeband unter einem Winkel von 180° mit einer Geschwindigkeit von 1 m/Minute abgezogen. Es wird die Kraft, die für dieses Abziehen erforderlich ist und in der folgenden Tabelle als Trennwert bezeichnet wird, gemessen. Die Prüfung wird ebenfalls bei 20°C durchgeführt.

b) Bestimmung der Restklebkraft

Die gemäß a) abgezogenen Klebestreifen werden auf eine polierte Stahlplatte gewalzt und 24 Stunden mit 2 kPa (20 p/cm²) bei 20°C und 70°C belastet. Danach wird der Klebestreifen, wie bei der Bestimmung der Trennwerte beschrieben, abgezogen. Die so ermittelte verbliebene Klebkraft wurde in Relation zu der Klebkraft gesehen, die bei einem Blindversuch ermittelt worden war, bei dem der Klebestreifen sofort auf die polierte Stahlplatte gewalzt worden war (und nicht erst auf das beschichtete Papier). Dieser Blindwert wurde mit 100 % angenommen.

c) Abriebfestigkeiten
Mit einem trockenen Finger wird kräftig über das Papier gerieben.

d) Topfzeiten
Es wird die Viskosität beobachtet und die Verarbeitbarkeit geprüft.

| | Beispiel | Trennwert 20°C | Trennwert 70°C | Restklebkraft 20°C [ % ] | Restklebkraft 70°C [ % ] | Topfzeit | Abriebfestigkeiten |
|---|---|---|---|---|---|---|---|
| erfindungsgemäß | 1 | 0 | 5 | 95 | 90 | > 7 Tage | gut |
| | 2 | 0 | 5 | 92 | 87 | > 7 Tage | gut |
| | 3 | 0 | 5 | 91 | 87 | > 7 Tage | gut |
| | 4 | 0 | 10 | 91 | 86 | > 7 Tage | gut |
| nicht erfindungsgemäß | 5 | 0 | 5 | 76 | 71 | > 7 Tage | gut |
| | 6 | 5 | 5 | 89 | 84 | > 8 h | gut |

Der Vergleich der erfindungsgemäßen Beispiele 1 bis 4 mit dem nichterfindungsgemäßen Beispiel 5 zeigt, daß schlechtere Restklebkräfte erhalten werden, wenn acetylenische Alkohole und Allyletherpolyole nicht an einem Polysiloxanmolekül gebunden sind.

Der Vergleich mit dem nichterfindungsgemäßen Beispiel 6 zeigt die Verlängerung der Topfzeit durch Einbau der acetylenischen Alkohole in Allyletherpolyolsiloxane, die aus dem Stand der Technik bekannt waren.

Patentansprüche:

1. Organopolysiloxane der allgemeinen Formel

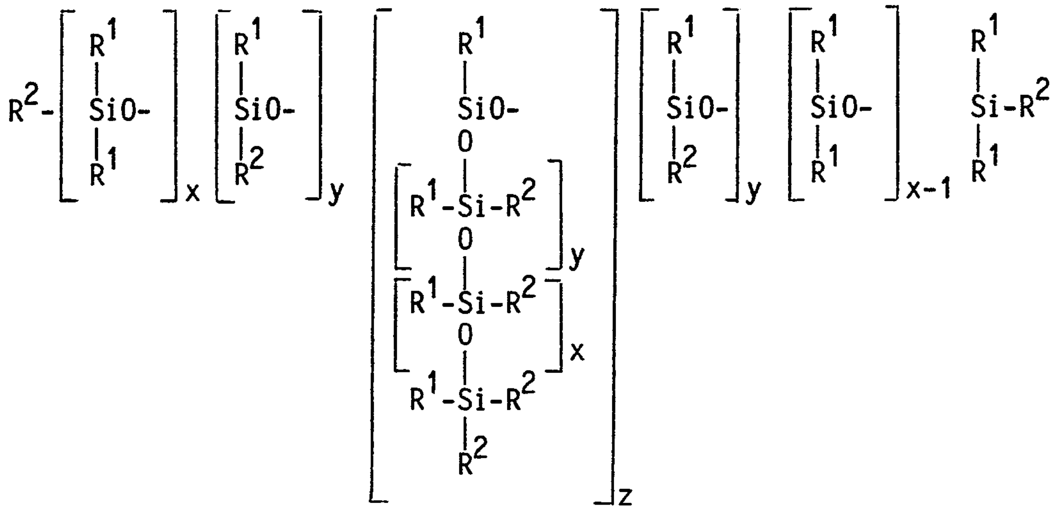

wobei

$R^1$ ein Methyl- oder Phenylrest ist, jedoch mindestens 90 % der Reste $R^1$ Methylreste sind,

$R^2$ dem Rest $R^1$ entspricht oder den Rest $OR^3$ bedeutet, der von einem Alkoholgemisch $HOR^3$ abgeleitet ist, welches aus

a) einem eine -C≡C-Gruppe enthaltenden, aliphatischen Alkohol, geradkettig oder verzweigt, mit 3 bis 25 Kohlenstoffatomen und

b) einem Monohydroxypolyallylether eines Polyalkohols mit 2 bis 6 Hydroxylgruppen besteht,

Anzahl der Einheiten x = 0 bis 2000,
Anzahl der Einheiten y = 0 bis 20,
Σ Einheiten x, y $\geqq$ 1,
Anzahl der Einheiten z = 0 bis 10,

mit der Maßgabe, daß im mittleren Molekül mindestens eine -C≡C-Gruppe enthalten ist und das Zahlenverhältnis der -C≡C-Gruppe zu den Allylgruppen 5 : 1 bis 1 : 250 beträgt.

2. Organopolysiloxane nach Anspruch 1, dadurch gekennzeichnet, daß der gemischte Rest $OR^3$ aus einem Rest der Gruppe

a) $-OCH_2C{\equiv}CH$ , $-OCH_2CH_2C{\equiv}CH$ , 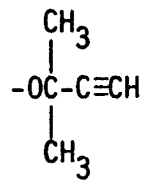 , 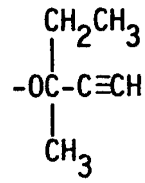 ,

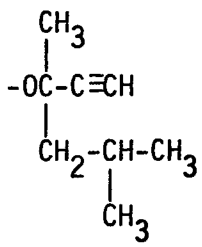 , 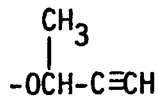 , 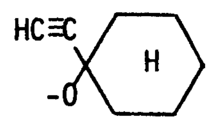

und einem Rest der Gruppe

b) 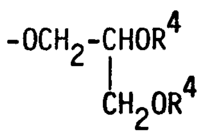 , 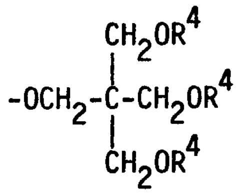 , $-OCH_2-(CHOR^4)_4-CH_2OR^4$ ,

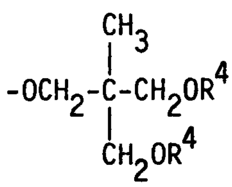 , 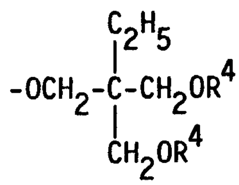

wobei $R^4$ ein Allylrest ist,

besteht.

3. Verfahren zur Herstellung der Verbindungen des Anspruchs 1 und 2, dadurch gekennzeichnet, daß man ein Organopolysiloxan der allgemeinen Formel

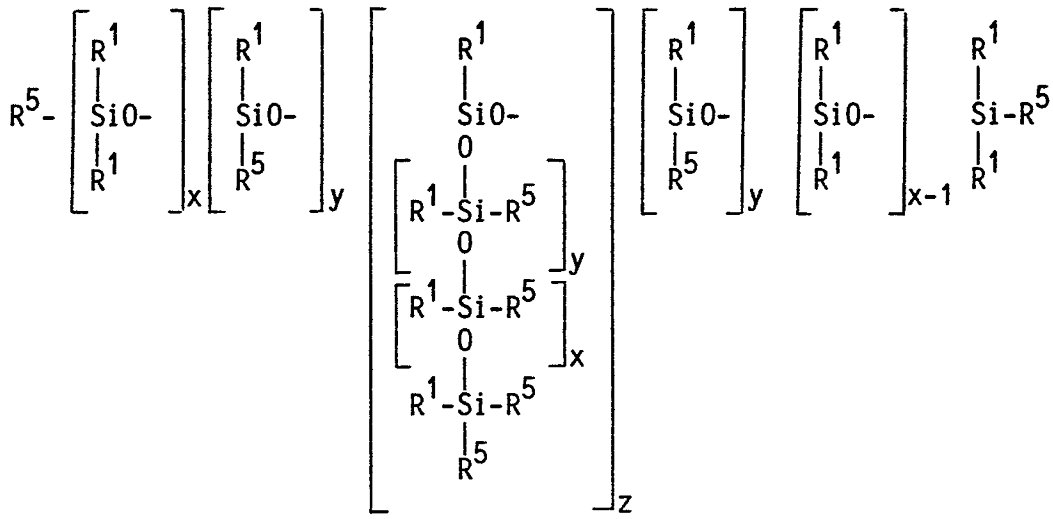

wobei

$R^1$, x, y, z wie oben definiert sind, und

$R^5$ dem Rest $R^1$ entspricht oder ein niederer Alkoxyrest mit 1 bis 4 Kohlenstoffatomen, ein Halogen- oder Wasserstoffrest ist, mit der Maßgabe, daß mindestens ein $R^3OH$ äquivalenter Teil der Reste $R^5$ Alkoxy-, Halogen- oder Wasserstoffreste sein müssen,

mit einem Alkoholgemisch $R^3OH$ in an sich bekannter Weise in solchen Mengen umsetzt, daß im mittleren Molekül des Verfahrensproduktes mindestens eine -C≡C-Gruppe vorhanden ist und das Zahlenverhältnis der -C≡C-Gruppe zu den Allylgruppen 5 : 1 bis 1 : 250 beträgt.

4. Aushärtbare Organopolysiloxanzubereitung, dadurch gekennzeichnet, daß sie aus

0,1 bis 95 Gew.-% Verbindungen des Patentanspruchs 1,

1 bis 70 Gew.-% eines Organopolysiloxans mit mindestens zwei an Si gebundenen Wasserstoffresten,

0,0001 bis 0,1 Gew.-% eines für die Anlagerung von Kohlenstoff-Kohlenstoff-Mehrfachbindungen an SiH-Gruppen an sich bekannten Katalysators,

0 bis 95 Gew.-% eines Organopolysiloxans der allgemeinen Formel

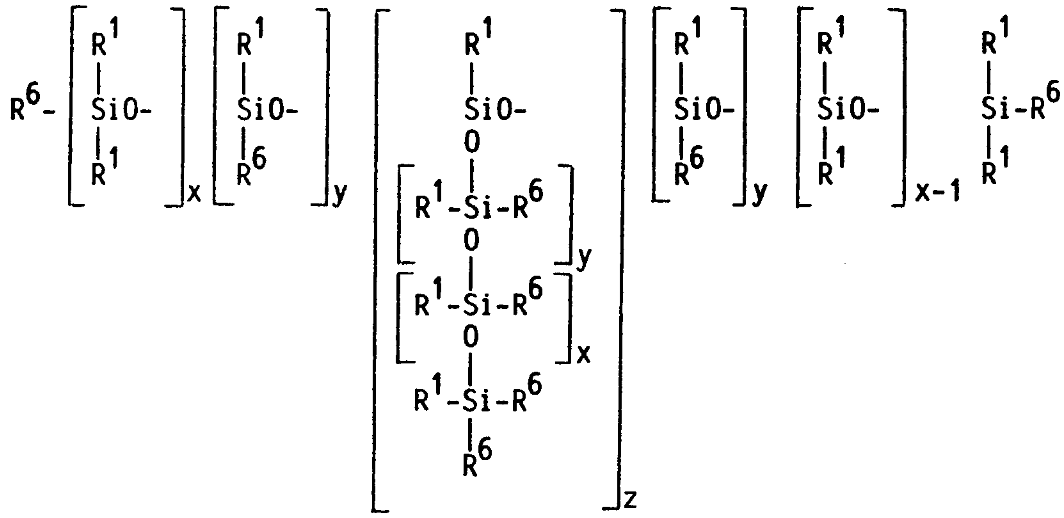

wobei $R^1$, x, y, z wie oben definiert sind und $R^6$ den Rest $-OR^7$ bedeutet, der von einem Monohydroxydi- oder -polyallylether eines Polyalkohols $HOR^7$ abgeleitet ist,

besteht und gegebenenfalls zusätzlich Füllstoffe, Pigmente, Weichmacher, Lösungsmittel oder Antioxydantien in an sich bekannter Art und Menge enthält.

5. Siloxanzubereitung nach Anspruch 4, dadurch gekennzeichnet, daß die Verbindungen des Patentanspruchs 1 und die Organopolysiloxane mit an Si gebundenen Wasserstoffresten innerhalb des angegebenen Bereiches in solchen Mengen vorliegen, daß das Zahlenverhältnis von Gruppen mit olefinischen Doppelbindungen zu SiH-Gruppen etwa 0,8 : 1 bis 1 : 2,5 beträgt.